# EUROPEAN PATENT SPECIFICATION

(11) **EP 2 980 367 B1**
(45) Date of publication and mention of the grant of the patent: **28.09.2016**
(21) Application number: 14179492.5
(22) Date of filing: 01.08.2014
(51) Int. Cl.: F01D 25/16

(54) **Thrust and journal bearing for steam turbines**
Druck- und Traglager für Dampfturbinen
Palier de tourillon et de poussée pour turbines à vapeur

(43) Date of publication of application: 03.02.2016
(73) Proprietor: Siemens Aktiengesellschaft, 80333 München (DE)
(72) Inventor: Rihak, Pavel, 616 00 Brno (CZ)

(56) References cited:
- EP-A1- 0 445 733
- GB-A- 2 283 287
- US-A- 5 759 011

## Description

### Field of invention

The present invention relates generally to a thrust and journal bearings, in particular to a bearing acting both as thrust and a journal bearing for a steam turbine.

### Art Background

Single casing steam turbines can provide geared or direct drive to the driven equipment, e.g. generators, compressors or pumps, and are usually used for industrial purpose, e.g. in industrial power plants, in chemical industry, sugar industry, textile industry, in pulp and paper mills, steel works, mines, in cogeneration and district heating plants, concentrated solar power plants, geothermal power plants, biomass plants, and waste to energy etc.

In general, a steam turbine power system or plant comprises a series connected arrangement of a steam generator which generates steam from water through heating such as by coal, gas or oil, the steam turbine which converts the energy contained in the steam into rotary power to drive the driven equipment.

The casing of a steam turbine encloses stationary blades secured to the interior of the casing and rotating blades on the turbine shaft wherein the high pressure steam is permitted to expand through alternating arrays of stationary and rotating-blades or stages to impart rotation to the shaft which is connected to drive the driven equipment. Since the pressure in a steam turbine decreases as it passes through the various turbine stages, different pressure taps are located axially along the turbine casing. Various system demands result in the need for turbine to meet various flow configurations, and to meet a plurality of variables such as condensing or non-condensing exhaust; straight through, or controlled extraction or controlled admission.

In case of condensing exhaust, the steam after passing through the turbine blades is exhausted through the turbine casing and conducted to a condenser for conversion back to water which is returned to the steam generator. In case of non-condensing exhaust, the steam is obtained from turbine extractions or from the turbine exhaust and is pulled from various locations and typically used in there is a need to have steam at specific pressure and temperature conditions for other industrial applications, such as preheating water boilers etc. Valves may control steam extracted from a non-condensing steam turbine. Extraction points can be located at any point in the steam path that provides the necessary steam conditions.

Thrust bearing and journal bearing that are necessary to hold the rotor of steam turbine usually consume a lot of space and are complicated.

A known solution is provided in US 5759011, describing a journal bearing assembly for mounting within a rotatable shaft that has been hollowed out to form a shaft cavity on a shaft end, the assembly comprising a plurality of bearing pads positioned about a bearing support, the support and the bearing pads being positioned within the hollowed out shaft end, the bearing pads being then positioned between the bearing support and the shaft cavity wall. Journal tilting pads are also used inside the shaft cavity wall. The main drawback of the present solution is that it necessitates a hollow end of the shaft to be formed for the coupling with the bearing pads.

### Summary of the Invention

The purpose of the invention is to provide a bearing including a thrust section and a journal section that is compact and simple.

In order to achieve the objects defined above, a thrust and journal bearing according to the independent claim is provided. The dependent claims describe advantageous developments and modifications of the invention.

According to the present invention, a thrust and journal bearing for steam turbines, comprises:
a rotor having at least a first rotor collar and a second rotor collar,
a thrust bearing section, which includes a thrust bearing body, a first plurality of thrust tilting pads between the first rotor collar and the thrust bearing body and a second plurality of thrust tilting pads between the second rotor collar and the thrust bearing body;
a journal bearing section, which includes a journal bearing body and a plurality of journal tilting pads between the rotor and the journal bearing body.

The thrust bearing section and the journal bearing section are integrated into a bearing assembly that is fixable to an inner support or hanger of a bearing pedestal.

According to another aspect of the invention, the thrust bearing body is interposed between the first plurality of thrust tilting pads and the second plurality of thrust tilting pads.

According to still another aspect of the invention, the thrust bearing body is interposed between the first plurality of thrust tilting pads and the second plurality of thrust tilting pads.

According to a further aspect of the invention, the first plurality of thrust tilting pads and the second plurality of thrust tilting pads are respectively mounted on opposite axial sides of the thrust bearing body.

According to a further aspect of the invention, the thrust bearing section and the journal bearing section are integrated into a bearing assembly by connecting the thrust bearing body and the journal bearing body through a bolt, screw or shank.

According to a further aspect of the invention, a bearing bracket or a stirrup fixes the journal bearing body to the inner support or hanger.

According to a further aspect of the invention, a bearing housing cover is mounted on the bearing pedestal.

According to a further aspect of the invention, the bearing assembly is fixed solely by the bearing bracket or stirrup, and the bearing assembly is supported solely by the inner support or hanger.

According to a further aspect of the invention, a groove is arranged circumferentially on the journal bearing body, and two plates are placed on both sides of the bearing bracket or stirrup and between the bearing bracket or stirrup and the journal bearing body.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows schematically a journal and thrust bearing according to the present invention connected with a turbine rotor and fastened to a bearing pedestal,
Fig. 2 shows the journal and thrust bearing of Fig. 1.

### Detailed Description

The illustration in the drawing is schematic. In different figures, similar or identical elements are provided with the same reference sign.

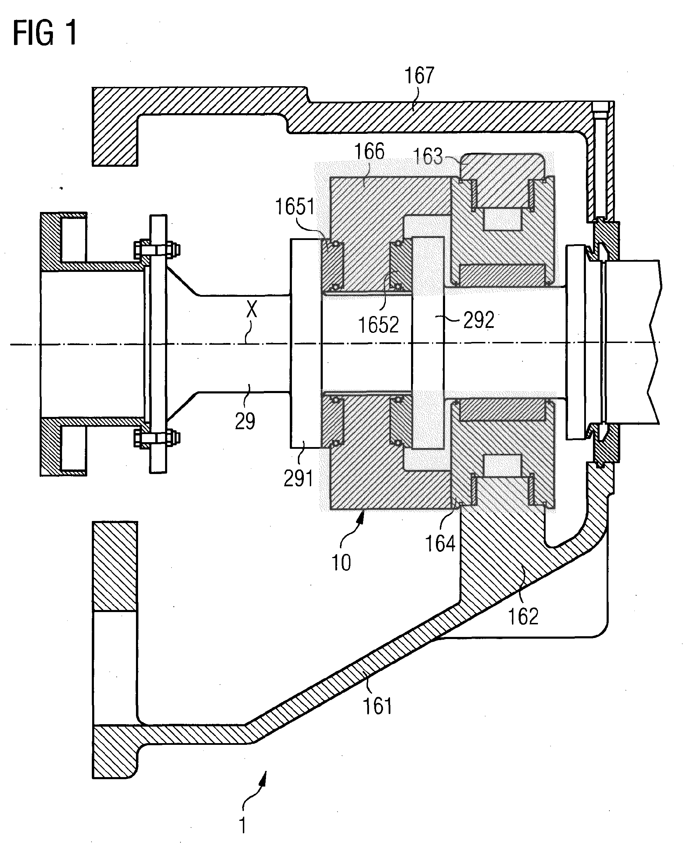

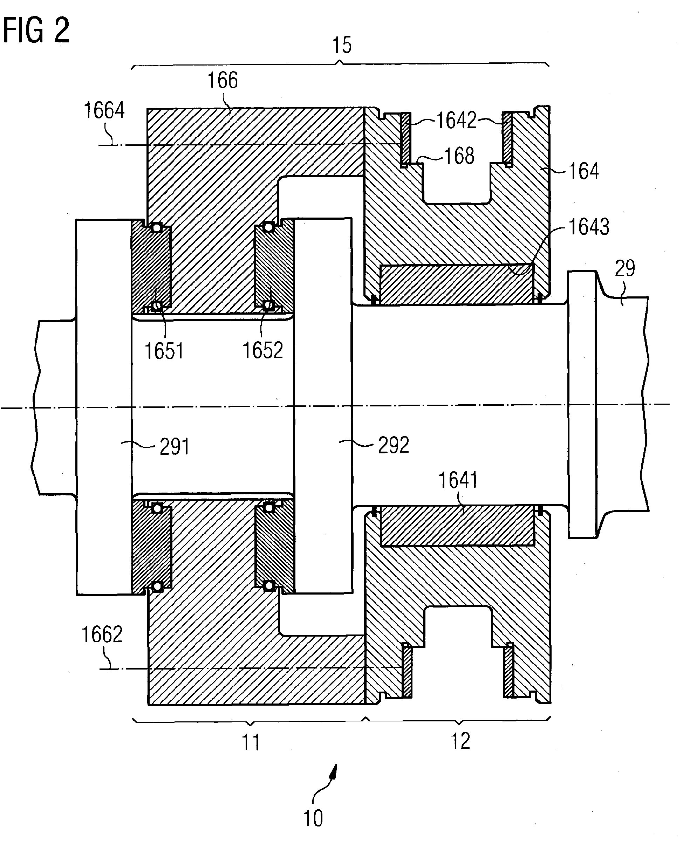

As shown in Fig. 1, an assembly 1 includes a thrust and journal bearing 10 and a bearing pedestal (161). As shown in Fig. 1 and, in greater detail in Fig. 2, a thrust and journal bearing 10 comprises a rotor 29 having an axis of rotation X. The thrust and journal bearing 10 further comprises a thrust bearing section 11, a journal bearing section 12, wherein the thrust bearing section 11 and the journal bearing section 12 are integrated into a bearing assembly 15. The rotor 29 has a first rotor collar 291 and a second rotor collar 292, axially distanced from the first rotor collar 291 along the rotation axis X.

The thrust bearing section 11 comprises a thrust bearing body 166, and a first plurality of thrust tilting annular pads 1651 between the first rotor collar 291 and the thrust bearing body 166. The thrust bearing section 11 further comprises a second plurality of thrust tilting annular pads 1652 between the second rotor collar 292 and the thrust bearing body 166, in such a way that the thrust bearing body 166 is interposed between the first plurality of thrust tilting pads 1651 and the second plurality of thrust tilting pads 1652.

Each plurality of thrust tilting pads 1651, 1652 typically includes, according to possible embodiments of the present invention, 8 to 14 pads.

The first thrust tilting pads 1651 and the second thrust tilting pads 1652 are respectively mounted on opposite axial sides of the thrust bearing body 166. Both the first plurality of thrust tilting pads 1651 and the second plurality of thrust tilting pads 1652 are respectively active on planar annular surface of the first rotor collar 291 and of the second rotor collar 292.

Thrust tilting pads 1651, 1652 are connected to the thrust bearing body 166 via pins (not shown) and secured by additional wires (not shown) or sometimes screws, bolts, or other similar securing means.

The journal bearing section 12 comprises a journal bearing body 164 and a plurality of journal tilting pads 1641 between the rotor 29 and the journal bearing body 164. The journal tilting pads 1641 are fixed to an inner annular circumferential groove 1643 of the journal bearing body 164 and are active on a circumferential surface of the rotor 29.

According to possible embodiments of the present invention, the journal tilting pads 1641 are typically 4 or 5 and are connected to the journal bearing body 164 via screws, bolts, or other similar securing means.

The bearing assembly 15 is fixed to an inner support or to an hanger 162 of the bearing pedestal 161 through a bearing bracket or through a stirrup 163.

The inner support or hanger 162 is an integrated part of the bearing pedestal 161, and the bearing bracket or stirrup 163 is a separate part that can be mounted on the inner support or hanger 162 inside the bearing pedestal 161.

In addition, a bearing housing cover 167 is mounted on the bearing pedestal 161. Although in the embodiment shown in the attached Figures, the bearing bracket or stirrup 163 and the bearing housing cover 167 are independent parts, in other embodiment (not shown) bearing bracket or stirrup and bearing housing cover can be integrated into a single part, e.g. by casting. For the fixing to the bearing pedestal 161 through the bearing bracket or stirrup 163, a circumferential groove 168 is prepared on the journal bearing body 164 that is slightly wider than the opposite part to enable fixing of the bearing assembly 15 precisely against the rotor 29 via two plates 1642 on two lateral sides of the bearing bracket or stirrup 163 and between the bearing bracket or stirrup 163 and two respective lateral sides of the journal bearing body 164. The use of plates made by metal makes the alignment of the rotor 29 against the stator easier.

The bearing assembly 15 may be fixed to the support 162 through other known means and with different shape of grooves or different number of plates. However, it is advantageous that the bearing assembly is fixed solely by a single bearing bracket or stirrup 163 or by a bearing bracket or stirrup integrated to the bearing housing cover, and supported solely by support 162.

As shown in Fig. 2, the thrust bearing body 166 and the journal bearing body 164 are connected to each other in order to integrate the thrust bearing section 11 to the journal bearing section 12 into the bearing assembly 15. The thrust bearing body 166 and the journal bearing body 164 are connected to each other through bolt, screw or shank (not shown), inserted into a plurality of circumferentially distributed holes (two diametrically opposed holes 1662, 1664 are shown in the sectional view of Fig. 2).

According to other possible embodiments of the present invention, other solutions may be used for connecting the thrust bearing body 166 and the journal bearing body 164, e.g. thrust bearing body 166 and journal bearing body 164 can be connected by only one of the holes 1662, 1664.

## Claims

1. A thrust and journal bearing (10) for steam turbines, comprising:
a rotor (29) having at least a first rotor collar (291) and a second rotor collar (292),
a journal bearing section (12), which includes a journal bearing body (164) and a plurality of journal tilting pads (1641) between the rotor (29) and the journal bearing body (164);
**characterized in that** the thrust and journal bearing (10) further comprises a thrust bearing section (11), which includes a thrust bearing body (166), a first plurality of thrust tilting pads (1651) between the first rotor collar (291) and the thrust bearing body (166) and a second plurality of thrust tilting pads (1652) between the second rotor collar (292) and the thrust bearing body (166);
the thrust bearing section (11) and the journal bearing section (12) being integrated into a bearing assembly (15) that is fixable to an inner support or hanger (162) of a bearing pedestal (161).

2. A thrust and journal bearing (10) according to claim 1, wherein the thrust bearing body (166) is interposed between a first plurality of thrust tilting pads (1651) and the second plurality of thrust tilting pads (1652).

3. A thrust and journal bearing (10) according to claim 2, wherein the first plurality of thrust tilting pads (1651) and the second plurality of thrust tilting pads (1652) are respectively mounted on opposite axial sides of the thrust bearing body (166).

4. A thrust and journal bearing (10) according to claim 1, wherein the thrust bearing section (11) and the journal bearing section (12) are integrated into a bearing assembly (15) by connecting the thrust bearing body (166) and the journal bearing body (164) through a bolt, screw or shank.

5. A thrust and journal bearing (10) according to claim 1, wherein a bearing bracket or stirrup (163) fixes the journal bearing body (164) to the inner support or hanger (162).

6. A thrust and journal bearing (10) according to claim 5, wherein a bearing housing cover (167) is mounted on the bearing pedestal (161).

7. A thrust and journal bearing (10) according to claim 5, wherein the bearing assembly (15) is fixed solely by the bearing bracket or stirrup (163), and the bearing assembly (15) is supported solely by the inner support or hanger (162).

8. A thrust and journal bearing (10) according to claims 6 or 7, wherein a groove (168) is arranged circumferentially on the journal bearing body (164), and two plates (1642) are placed on two respective sides of the bearing bracket or stirrup (163) and between the bearing bracket or stirrup (163) and the journal bearing body (164).

9. An assembly (1) including a thrust and journal bearing (10) according to any of the previous claims and a bearing pedestal (161), the bearing assembly (15) being fixed to an inner support or hanger (162) of the bearing pedestal (161).

## Patentansprüche

1. Druck- und Traglager (10) für Dampfturbinen, das Folgendes umfasst:
einen Rotor (29) mit zumindest einem ersten Rotorbund (291) und einem zweiten Rotorbund (292),
einen Traglagerabschnitt (12), der einen Traglagerkörper (164) und eine Vielzahl von Radialkippsegmenten (1641) zwischen dem Rotor (29) und dem Traglagerkörper (164) aufweist,
**dadurch gekennzeichnet, dass** das Druck- und Traglager (10) ferner einen Drucklagerabschnitt (11) umfasst, der einen Drucklagerkörper (166), eine erste Vielzahl von Axialkippsegmenten (1651) zwischen dem ersten Rotorbund (291) und dem Drucklagerkörper (166) und eine zweite Vielzahl von Axialkippsegmenten (1652) zwischen dem zweiten Rotorbund (292) und dem Drucklagerkörper (166) aufweist,
wobei der Drucklagerabschnitt (11) und der Traglagerabschnitt (12) zu einer Lagerbaugruppe (15) zusammengefügt sind, die sich an einer innenliegenden Trag- oder Haltevorrichtung (162) eines Lagerbocks (161) fixieren lässt.

2. Druck- und Traglager (10) nach Anspruch 1, bei dem der Drucklagerkörper (166) zwischen einer ersten Vielzahl von Axialkippsegmenten (1651) und der zweiten Vielzahl von Axialkippsegmenten (1652) angeordnet ist.

3. Druck- und Traglager (10) nach Anspruch 2, bei dem die erste Vielzahl von Axialkippsegmenten (1651) und die zweite Vielzahl von Axialkippsegmenten (1652) jeweils auf gegenüberliegenden axialen Seiten des Drucklagerkörpers (166) angeordnet sind.

4. Druck- und Traglager (10) nach Anspruch 1, bei dem der Drucklagerabschnitt (11) und der Traglagerabschnitt (12) zu einer Lagerbaugruppe (15) zusammengefügt sind, indem der Drucklagerkörper (166) und der Traglagerkörper (164) über einen Bolzen, eine Schraube oder einen Schaft verbunden sind.

5. Druck- und Traglager (10) nach Anspruch 1, bei dem eine Lagerbrücke oder ein Lagerbügel (163) den Traglagerkörper (164) an der innenliegenden Trag- oder Haltevorrichtung (162) fixiert.

6. Druck- und Traglager (10) nach Anspruch 5, bei dem eine Lagergehäuseabdeckung (167) auf dem Lagerbock (161) angebracht ist.

7. Druck- und Traglager (10) nach Anspruch 5, bei dem die Lagerbaugruppe (15) lediglich durch die Lagerbrücke oder den Lagerbügel (163) fixiert ist und lediglich von der innenliegenden Trag- oder Haltevorrichtung (162) getragen wird.

8. Druck- und Traglager (10) nach Anspruch 6 oder 7, bei der um den Traglagerkörper (164) eine Nut (168) angeordnet ist und zwei Platten (1642) auf zwei jeweiligen Seiten der Lagerbrücke oder des Lagerbügels (163) und zwischen der Lagerbrücke oder dem Lagerbügel (163) und dem Traglagerkörper (164) platziert sind.

9. Baugruppe (1) mit einem Druck- und Traglager (10) nach einem der vorhergehenden Ansprüche und einem Lagerbock (161), wobei die Lagerbaugruppe (15) an einer innenliegenden Trag- oder Haltevorrichtung (162) des Lagerbocks (161) fixiert ist.

## Revendications

1. Palier lisse de butée (10) pour des turbines à vapeur, comprenant :
un rotor (29) ayant au moins un premier collet (291) de rotor et un deuxième collet (292) de rotor,
une section (12) de palier lisse, qui inclut un corps (164) de palier lisse et une pluralité de patins d'inclinaison (1641) de palier lisse entre le rotor (29) et le corps (164) de palier lisse ;
**caractérisé en ce que** le palier lisse de butée (10) comprend en outre une section (11) de palier de butée, qui inclut un corps (166) de palier de butée, une première pluralité de patins d'inclinaison (1651) de palier de butée entre le premier collet (291) de rotor et le corps (166) de palier de butée et une deuxième pluralité de patins d'inclinaison (1652) de palier de butée entre le deuxième collet (292) de rotor et le corps (166) de palier de butée ;
la section (11) de palier de butée et la section (12) de palier lisse étant intégrées dans un ensemble (15) de palier qui peut être fixé sur un support ou une suspension interne (162) d'une chaise (161) de palier.

2. Palier lisse de butée (10) selon la revendication 1, dans lequel le corps (166) de palier de butée est interposé entre une première pluralité de patins d'inclinaison (1651) de palier de butée et la deuxième pluralité de patins d'inclinaison (1652) de palier de butée.

3. Palier lisse de butée (10) selon la revendication 2, dans lequel la première pluralité de patins d'inclinaison (1651) de palier de butée et la deuxième pluralité de patins d'inclinaison (1652) de palier de butée sont respectivement montées sur des côtés axiaux opposés du corps (166) de palier de butée.

4. Palier lisse de butée (10) selon la revendication 1, dans lequel la section (11) de palier de butée et la section (12) de palier lisse sont intégrées dans un ensemble (15) de palier en connectant le corps (166) de palier de butée et le corps (164) de palier lisse par l'intermédiaire d'un boulon, d'une vis ou d'une tige.

5. Palier lisse de butée (10) selon la revendication 1, dans lequel une console terminale ou un étrier (163) de palier fixe le corps (164) de palier lisse au support ou à la suspension interne (162).

6. Palier lisse de butée (10) selon la revendication 5, dans lequel un capot (167) de carcasse de palier est monté sur la chaise (161) de palier.

7. Palier lisse de butée (10) selon la revendication 5, dans lequel l'ensemble (15) de palier est fixé uniquement par le palier de support ou l'étrier (163) de palier, et l'ensemble (15) de palier est supporté uniquement par le support ou la suspension interne (162).

8. Palier lisse de butée (10) selon la revendication 6 ou 7, dans lequel une rainure (168) est agencée circonférentiellement sur le corps (164) de palier lisse, et deux plaques (1642) sont placées sur deux côtés respectifs du palier de support ou de l'étrier (163) de palier et entre le palier de support ou l'étrier (163) de palier et le corps (164) de palier lisse.

9. Ensemble (1) incluant un palier lisse de butée (10) selon l'une quelconque des revendications précédentes et une chaise (161) de palier, l'ensemble (15) de palier étant fixé à un support ou une suspension interne (162) de la chaise (161) de palier.
